Europäisches Patentamt

European Patent Office

Office européen des brevets

(19)

(11) Publication number: 0 299 762
A2

# (12) EUROPEAN PATENT APPLICATION

(21) Application number: 88306447.9

(22) Date of filing: 14.07.88

(51) Int. Cl.⁴: **C 08 F 2/32**
**C 08 J 9/28**

(30) Priority: 15.07.87 GB 8716618

(43) Date of publication of application:
**18.01.89 Bulletin 89/03**

(84) Designated Contracting States:
**AT BE CH DE ES FR GB GR IT LI NL SE**

(71) Applicant: **UNILEVER PLC**
**Unilever House Blackfriars P.O. Box 68**
**London EC4P 4BQ (GB)**

(84) Designated Contracting States: **GB**

(71) Applicant: **UNILEVER NV**
**Burgemeester s'Jacobplein 1 P.O. Box 760**
**NL-3000 DK Rotterdam (NL)**

(84) Designated Contracting States:
**BE CH DE ES FR GR IT LI NL SE AT**

(72) Inventor: **Gregory, Donald Peter**
**7 Runningbrook Road**
**Bridgewater New Jersey 08807 (US)**

**Sharples, Martin**
**30 Cross Lane Bromborough**
**Wirral, Merseyside (GB)**

**Tucker, Ian Malcolm**
**60 Newhall Road Upton**
**Chester Cheshire CH21TE (GB)**

(74) Representative: **Thomas, Susan Margaret et al**
**UNILEVER PLC Patents Division P.O. Box 68 Unilever**
**House**
**London EC4P 4BQ (GB)**

(54) Porous material.

(57) Process for preparing a porous material having a total pore volume of at least 75% of the overall volume of the material and comprising a plurality of cells having diameters within the range of from 1 to 100μm, the cells being interconnected by a plurality of holes, comprises preparing a water-in-oil emulsion containing the precursors for the material and having in the aqueous phase an ionic strength of $10^{-3}$ to 5 molar electrolyte and forming the porous material from the emulsion. The levels of electrolyte can have the beneficial advantage of effecting the size and number of the holes interconnecting the cells comprising the porous material.

EP 0 299 762 A2

**Description**

## POROUS MATERIAL

The present invention relates to a process for preparing a porous material, particularly although not exclusively a porous polymeric material.

EP-A-0060138 describes a porous polymeric material made from a high internal phase emulsion. The material has pore volume of more than 9cc/g and a dry density of less than 0.1g/cc. The material essentially comprises a series of substantially spherical, thin-walled cavities having a plurality of holes in the walls interconnecting the adjacent cavities. The specification states that frequently six or more holes can be seen in the cavities on inspection of electronmicrographs of polymer samples.

According to the present invention there is provided a process for preparing a porous material having a total pore volume of at least 75% of the overall volume of the material and comprising a plurality of cells having diameters within the range of from 1 to 100$\mu$m, the cells being interconnected by a plurality of holes, wherein the process comprises preparing a water-in-oil emulsion containing the precursors for the material and having in the aqueous phase an ionic strength of $10^{-3}$ to 5 molar electrolyte and forming the porous material from the emulsion.

Suitably the step of forming the porous material includes a polymerisation reaction. The precursors for the porous material can include for example vinyl monomeric and/or dimeric material and appropriate initiators and polymerisation catalysts therefor. In such materials the preferred methods of preparation and preferred materials can be as described in EP-A-0060138, whose contents are hereby incorporated by reference. As explained in EP-A-0060138 the continuous phase can be constituted by the monomer or mixture of monomers together with a small amount of cross-linking agent. By "oil" we therefore mean a liquid phase immiscible with the aqueous phase present.

The presence of the stated levels of electrolyte in the present process can have the beneficial advantage of effecting the size and number of the holes interconnecting the cells comprising the porous material. The present invention can thus provide a method for controlling the hole size of the porous material. Such a means of control can be particularly important with regard to projected uses of the material. A number of applications involve flow of liquid through the material, for example if it is employed as a filter. A means to control during its preparation the through-flow properties of the material can thus be most useful. In particular, we have found that the permeability of the material is dependent on the radius of the interconnecting hole size cubed. Thus even a modest change in hole size can have a significant effect on the flow-rate through the material under a given set of conditions.

Suitably the size of the holes can be selected to lie within the range 1 to 5$\mu$m. Preferably the cell sizes fall within the range 1 to 50$\mu$m, more preferably 5 to 30$\mu$m. The resulting material can have a ratio of cell size to hole size within the range 6:1 to 2:1. The present process can moreover provide a porous material having total volume of at least 90% and up to 99% of the overall volume of the material.

The electrolyte selected should suitably be soluble in the aqueous phase of the water-in-oil emulsion. Preferred electrolytes include inorganic salts. They can be mono-, di- or tri-valent salts and can for example be selected from the group comprising soluble halides, especially chlorides, sulphates and nitrates. Specific examples include sodium chloride, calcium chloride, lanthanum chloride, sodium sulphate and magnesium sulphate.

The amount of electrolyte employed should be sufficient to have an effect on hole size. The amount required is expressed in terms of ionic strength which is defined as $^1/_2\Sigma\ m,z^2$ where m = molarity and z = valence of electrolyte species present. Thus for a 1:1 electrolyte ionic strength = molarity and for a 2:1 electrolyte ionic strength = 3x molarity.

Preferably the electrolyte is employed in an amount to give an ionic strength of at least $10^{-2}$M. In general terms the greater the ionic strength the greater is the size of the holes. Thus for any one system the level of ionic strength can be used to control the hole size to a pre-selected range.

In order to calculate the ionic strength the presence of all electrolytes present must be included. Thus any initiator such as a persulphate must be included. On its own any persulphate acting as an initiator in the present systems will be present in an amount less than $10^{-3}$M.

The present process includes preparing a high internal phase water-in-oil emulsion. Suitably such a step is done by stirring. In general terms the greater the amount of stirring the smaller is the size of the droplets comprising the internal phase, and hence the size of the resulting cells. The amount of stirring can also have some effect on the size of the holes. The present process therefore allows a means of determining hole size which is separate from the amount of stirring to which the emulsion may be subjected.

It is to be understood that the present invention includes a process for controlling the size of the interconnecting holes between the cells comprising the porous material, and a porous material having a pore volume of at least 75% of the overall volume of the material comprising a plurality of cells interconnected by a plurality of holes, the cells having diameters within the range 1 to 100$\mu$m and the holes having a size falling within a predetermined range. Preferably the material has cell sizes falling within the range 1 to 50$\mu$m, more preferably 5 to 30$\mu$m. The hole sizes can suitably be selected to lie within the range 1 to 5$\mu$m. The resulting material can have a ratio of cell size to hole size within the range 6:1 to 2:1. Materials can thus be provided having high porosity, preferably between 90 and 99%, and permeability between 0.1 and 1.5 Darcys. The present porous material is preferably polymeric and can for example be derived from a vinyl material.

Embodiments of the present invention will now be described by way of example only with reference to the following Examples.

Experimental Procedure

30cm³ styrene, 3cm³ divinyl benzene (55% solution in divinyl benzene) and 6gm SPAN 80 (ICI) were mixed together to form a solution. To this was added 300cm³ of an aqueous phase containing 2.5gl⁻¹ potassium persulphate together with the appropriate amount of an electrolyte as specified below. Stirring was effected using a three-bladed paddle stirrer operating at 500rpm. Temperature in all cases was ambient (25°C). The emulsions were polymerised in polypropylene pots by placing in an oven at 60°C for approximately 18 hours. The polymerised materials were sliced into 2 to 5mm thick sheets for cleaning and evaluation as given below. Cleaning was effected by copious washing with water to remove residual inorganics followed by soxhletting for about 20 hours with isopropyl alcohol to remove surplus surfactant (SPAN 80). Materials were then air dried at ambient temperature.

Analytical Methods

1. SEM Scanning electron micrographs were taken of fractured samples after coating with gold.
2. Bubble Point The bubble point(P) is the pressure of gas necessary to displace liquid from a fully wetted medium. It is related to the interconnecting hole size(r) by the relationship:

$$P = \frac{4\gamma}{\rho g.r}$$

where $\gamma$ is the surface tension of wetting liquid, $\rho$ is its density and g is the acceleration due to gravity. The bubble point method gives a measure of the largest interconnecting pathways through the medium under test.
3. Permeability The permeability (K) of the medium is a measure of its resistance to flow and is illustrated by the equation:

$$Q = \frac{KA\Delta P}{\eta L}$$

where Q is the flow rate (cm³ sec⁻¹) of a fluid of viscosity of $\eta$ (cp) through a slab of material of cross section A (cm²) and thickness L(cm) under a differential pressure of $\Delta P$ (Atmospheres). The permeability K is then given in Darcys.

Example 1 CaCl₂ as the electrolyte.

| Added Electrolyte conc$^n$ | Cell diameter/$\mu$m by SEM | Hole diameter/$\mu$m Bubble Point | Permeability/ Darcys |
|---|---|---|---|
| 0 | 10 | 1.8 | 0.15 |
| $10^{-3}$M | 10 | 2.6 | 0.48 |
| $10^{-2}$M | 10 | 2.7 | 0.44 |
| $10^{-1}$M | 10 | 3.1 | 0.70 |
| $10^{\circ}$M | 10 | 4.2 | 1.43 |

Time of post mixing of emulsion was 30 minutes at 25°C.

Example 2 NaCl as the electrolyte

| Added Electrolyte conc$^n$ | Cell Diameter/μm by SEM | Hole Diameter/μm Bubble Point | Permeability/ Darcys |
|---|---|---|---|
| 0 | 12 | 2.2 | 0.34 |
| $10^{-3}$M | 12 | 2.3 | 0.58 |
| $10^{-1}$M | 12 | 3.6 | 1.16 |

Time of post mixing of emulsion was 20 minutes at 25°C.

Example 3

The above experimental procedure was followed for two sets of experiments with the exception that the amount of Span 80 emulsifier was varied from 10 to 50 wt% based on the total weight of monomers. In one set of experiments the aqueous phase contained $10^{-1}$M CaCl$_2$ as added electrolyte. The other set of experiments contained no added CaCl$_2$ and hence acted as a control. All the emulsions had an internal phase volume of 90%. The resulting materials were tested by bubble point measurement using isopropyl alcohol as the displaced liquid.

| Span 80 Concentration (wt% based on monomer) | Bubble Point (psi) | |
|---|---|---|
| | No added electrolyte | $10^{-1}$M CaCl$_2$ added |
| 10 | * | 1.75 |
| 20 | 3.75 | 2.0 |
| 40 | 4.25 | 2.25 |
| 50 | 4.25 | 2.25 |

*collapsed structure on drying; very small holes.

**Claims**

1. A process for preparing a porous material having a total pore volume of at least 75% of the overall volume of the material and comprising a plurality of cells having diameters within the range of from 1 to 100μm, the cells being interconnected by a plurality of holes, wherein the process comprises preparing a water-in-oil emulsion containing the precursors for the material and having in the aqueous phase an ionic strength of $10^{-3}$ to 5 molar electrolyte and forming the porous material from the emulsion.

2. A process according to Claim 1 wherein the precursors for the material include a vinyl monomeric material and an initiator therefor.

4

3. A process according to Claim 1 or Claim 2 wherein the said aqueous phase has an ionic strength of at least $10^{-2}$ molar electrolyte.

4. A process according to any one of the preceding claims wherein the electrolyte includes electrolyte selected from the group comprising soluble halides and sulphates.

5. A process according to any one of the preceding claims including stirring the emulsion so as to reduce the size of the droplets comprising the internal aqueous phase and hence the size of the cells.

6. A process according to any one of the preceding claims including washing and drying the porous material.

7. A process according to any one of the preceding claims wherein the porous material has a total pore volume of at least 90% and up to 99% of the overall volume of the material.

8. A porous material having a total pore volume of at least 75% of the overall volume of material comprising a plurality of cells interconnected by a plurality of holes, the cells having diameters within the range 1 to 100μm and the holes having diameters within the range 1 to 5μm.

9. A porous material according to Claim 8 having a ratio of cell size to hole size within the range 6:1 to 2:1.

10. A porous material according to Claim 8 or Claim 9 having a total pore volume of at least 90% and up to 99% of the overall volume of the material.